# EUROPEAN PATENT APPLICATION

(11) **EP 3 333 142 A1**
(43) Date of publication of application: **13.06.2018**
(21) Application number: 16203067.0
(22) Date of filing: 09.12.2016
(51) Int. Cl.: C04B 41/89, C04B 41/00, C04B 41/45, C04B 41/52, B32B 18/00

(54) **CO-SINTERING A CERAMIC LAYER UPON A CMC SUBSTRATE**

(71) Applicant: Siemens Aktiengesellschaft, 80333 München (DE)
(72) Inventor: FLORES RENTEIRA, Arturo, 12161 Berlin (DE); REYMANN, Helge, 14167 Berlin (DE); RICHTER, Johannes, 10559 Berlin (DE); WIRTH, Cynthia, 12163 Berlin (DE)

(57) **Abstract**

By co-sintering a green layer of a ceramic with a green CMC substrate (4) a better adhering of the TBC (10') to the CMC substrate (4') is yielded.

## Description

The invention relates to sintering a ceramic layer on a CMC substrate.

Thermal barrier and environmental barrier coatings, TBC and EBC respectively, are commonly applied as protective barrier onto ceramic heat shields for usage in hot gas path regions in the gas turbine. The protective layer inhibits any corrosion process of the ceramic substrate with consequently loss of mechanical strength. The TBC and/or EBC layer is usually applied by means of thermal spray technologies. This step takes place after the final sintering of the ceramic heat shields and therefore the main mechanism of adherence on the substrate is via mechanical anchoring. The absence of a stronger adhesion between protective layer and ceramic substrate, e.g. chemical reaction, leads to spalling of the protective layer after short period of operation.

Light grit blast of sintered Ceramic Heat Shield is used to roughen the surface and allow mechanical bond.

It is therefore the aim of the invention to overcome the problem given above.

The problem is solved by a method according to claim 1.

In the subclaims further advantages are listed and can be combined arbitrarily with each other to yield further advantages.

By applying the protective layer (TBC and/or EBC) prior to the sintering step in a green status as a slurry/suspension (water-based or organic-based slurry), followed by a concomitant sintering of the ceramic heat shield with the protective layer, or so-called co-sintering, a chemical reaction between ceramic and protective layer takes place, which in turn reduces and/or eliminates the layer spalling. It is expected therefore a significant increase in the operational hours of the co-sintered ceramic heat shields and protective layer.

The co-sintering between ceramic heat shield and protective layer taking place in the same range of temperature or stepwise to the range of temperature upon which densification of the ceramic constituents takes place ensures a chemical reaction between the components. The protective layer is applied via a suspension or slurry of the TBC and/or EBC components after the de-molding and drying of the ceramic heat shields. The co-sintering of both ceramic heat shield and protective layer does not require special sintering ovens. The current last step for coating the ceramic heat shield which is very long can be completely eliminated.

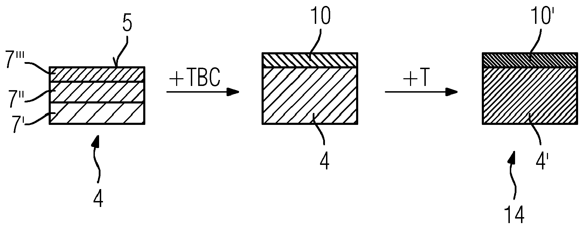

The figure show schematic the step of the invented method.

The description and the figures are only examples of the invention.

The figure shows the producing process starting with a green CMC substrate 4 (left).

The green CMC substrate 4 is especially built up of at least one green ply 7', 7", 7"', ....

Each green ply 7', 7", 7"', ... contains fibers, especially of silicon carbide (SiC), alumina (Al₂O₃), mullite, alumina/mullite or combinations of these.

The fibers or the fiber mat are embedded in ceramic material which can be silicon carbide (SiC), alumina (Al₂O₃) or alumina/mullite or combinations of these.

The green plies 7', 7", 7"', ... are pressed together and need a sintering step (+T) to yield a final CMC part 14.

For some applications a ceramic coating is necessary at least partially on the surface 5 of the CMC substrate 4.

Therefore a green layer 10 of a ceramic is applied (+ TBC) before the sintering step.

The green ceramic layer 10 can be any well known TBC material like zirconia or phyrochlore or a double layered zirconia/phyrochlore structure.

Furthermore, some ceramic bond coat between the green CMC substrate 4 and the green layer 10 can be applied on (not shown), especially alumina.

Each method known in the state of the art can be used to apply the green ceramic layer 10 on the green substrate 4.

In the sintering step shown (+T) the green substrate 4 and the at least one green layer 10 are sintered and densified and a final coated CMC product 14 is reached with a sintered substrate 4' and a sintered layer 10'.

## Claims

1. Method
of producing a layer system (14) with a ceramic layer (10') on a CMC substrate (4') by sintering,
wherein firstly a green CMC substrate (4) is produced or provided and
at least partially on a surface (5) of the green CMC substrate (4) at least one green ceramic layer (10) is applied (+ TBC),
wherein in a final step the green CMC substrate (4) with the green ceramic layer (10) together is sintered (+ T) to a final CMC component (14) with a densified CMC-substrate (4') and a sintered ceramic layer (10').

2. Method according to claim 1,
wherein the green CMC substrate (4) comprises at least one green ply (7', 7", 7"', ...).

3. Method according to claim 2,
wherein each green ply (7', 7", 7"', ...) comprises fibers and a ceramic matrix.

4. Method according to claim 3,
wherein the fibers comprise silicon carbide (SiC), alumina (Al₂O₃), alumina (Al₂O₃) /mullite or combinations of these.

5. Method according to claim 3 or 4,
wherein the ceramic matrix material of the green CMC substrate (4) comprises silicon carbide (SiC), mullite, alumina (Al₂O₃) /mullite or combinations of these.

6. Method according to any of the proceeding claims,
wherein the green ceramic layer (10) contains zirconia, which is applied on the surface (5) of the green CMC substrate (4),
especially as outermost layer.

7. Method according to claim 6,
wherein a bond coat,
especially a ceramic bond coat is applied first,
very especially alumina.
